# FASCICULE DE BREVET EUROPEEN

(11) **EP 1 406 465 B1**
(45) Date de publication et mention de la délivrance du brevet: **15.05.2013**
(21) Numéro de dépôt: 03292359.1
(22) Date de dépôt: 26.09.2003
(51) Int. Cl.: H04W 4/16, H04W 76/02

(54) **Procédé et dispositif de gestion d'interruption de liason radio dans une zone d'ombre radio**
Verfahren und Vorrichtung zur Verwaltung von Funkverbindungen in einem Funkschattenbereich
Method and device for the management of radio connection interruptions in a shadow radio zone

(30) Priorité: 03.10.2002 FR 0212242
(43) Date de publication de la demande: 07.04.2004
(73) Titulaire: Alcatel Lucent, 75007 Paris (FR)
(72) Inventeur: Lacroix, Didier, 78117 Chateaufort (FR); Soulie, Antoine, 75014 Paris (FR)
(74) Mandataire: Sciaux, Edmond

(56) Documents cités:
- EP-A- 1 124 395
- WO-A-00/33595
- US-B1- 6 215 782

## Description

L'invention concerne le domaine des réseaux de communications, et notamment la gestion des interruptions de liaison entre des stations mobiles (ou équipements utilisateurs) et un réseau d'accès radio (ou RAN pour « Radio Access Network ») d'un réseau de communications.

De nombreux réseaux de communications, et plus particulièrement les réseaux cellulaires, comportent des zones, dites « zones d'ombre », dans lesquelles ils ne peuvent assurer les liaisons radio entre les stations mobiles de leurs abonnés et leurs réseaux d'accès radio respectifs. Par conséquent, lorsqu'une station mobile, ayant établi une liaison radio avec un réseau de communications, pénètre dans une zone d'ombre de ce réseau, la liaison est momentanément interrompue. Généralement, après une interruption d'une durée choisie, typiquement de quelques secondes, la station mobile est considérée comme perdue par le réseau d'accès radio, et les ressources radio, qui avaient été allouées à cette liaison par ce réseau d'accès radio, et plus précisément par l'un de ses noeuds ou contrôleurs de réseau radio (tel qu'un RNC ou « Radio Network Controller »), sont considérées comme inutilisées. En d'autres termes, la liaison est définitivement interrompue.

Généralement, les contrôleurs de réseau radio continuent à transmettre les données de l'application sur la liaison radio en cours jusqu'à ce qu'ils détectent l'absence de la station mobile. Dès que cette absence est détectée, la transmission des données est définitivement interrompue, ce qui conduit à l'abandon de la liaison radio, même si l'on n'a pas encore atteint la fin de la durée choisie d'interruption.

Il a par ailleurs été proposé, dans le document brevet WO0033595, d'agencer les stations mobiles de sorte qu'en cas de détection d'une anomalie dans leur environnement radio, elles effectuent une recherche pour trouver un nouvel environnement de propagation radio et une demande de nouvelle connexion via une autre station de base que celle précédemment utilisée par le contrôleur de réseau radio pour établir leur liaison initiale, devenue inaccessible, Une telle solution nécessite l'adaptation des stations mobiles et, du fait des temps de traitement requis, peut empêcher un nouvel établissement de la liaison initiale en cas d'interruption de très courte durée.

Le document US-B1-6 215 782 décrit un procédé dans lequel un message de reconnexion est envoyé au terminal mobile, pour lui ordonner de se caler sur de nouveaux canaux de trafic, ou pour l'informer de requérir de nouvelles résources.

L'invention a donc pour but de remédier à tout ou partie des inconvénients précités.

Elle propose à cet effet un procédé et un dispositif de gestion de liaisons radio entre des stations mobiles (telles que, par exemple, des téléphones mobiles) et un réseau d'accès radio (ou RAN) d'un réseau de communications tels que définis par les revendications 1 et 5.

Préférentiellement, les tentatives de réactivation de la liaison radio sont effectuées chaque fois que l'on détecte une interruption.

Egalement de préférence, les tentatives de réactivation de la liaison radio sont effectuées selon le schéma temporel choisi pendant un intervalle de temps choisi, par exemple égal à quelques secondes.

Les moyens de contrôle peuvent être égatement agencés de manière à ordonner au contrôleur de réseau radio de tenter de réactiver la liaison radio après chaque détection d'interruption.

Par ailleurs, les moyens de contrôle peuvent être agencés de manière à ordonner au contrôleur de réseau radio de tenter de réactiver la liaison radio selon le schéma temporel choisi pendant un intervalle de temps choisi, par exemple égal à quelques secondes.

L'invention propose en outre un contrôleur de réseau radio, éventuellement couplé à un autre équipement de réseau d'accès radio, comme par exemple un RNC éventuellement couplé à un Node B dans le cas d'un réseau de type UMTS, ou par exemple un BSC (pour « Base Station Controller ») éventuellement couplé à une BTS (pour « Base Transceiver Station ») dans le cas d'un réseau de type GSM/GPRS, ainsi qu'un réseau de communications équipé d'au moins un dispositif du type de celui présenté ci-avant.

Le dispositif, le contrôleur de réseau radio, l'équipement de réseau d'accès radio et le procédé selon l'invention sont particulièrement bien adaptés, bien que de façon non exclusive, aux réseaux cellulaires de communications, et notamment aux réseaux de type TDMA, CDMA, CDMA-One, PHS et FOMA.

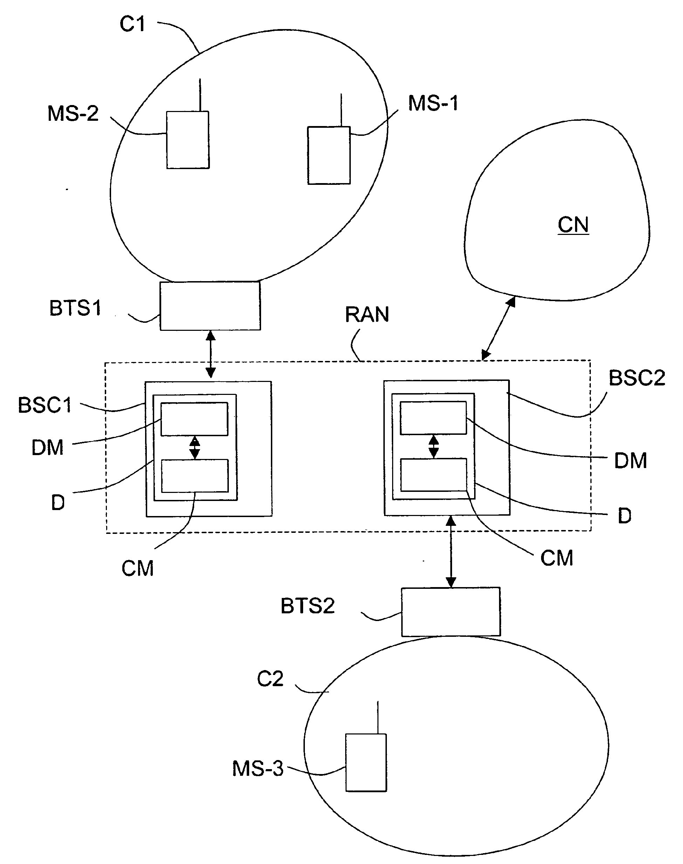

D'autres caractéristiques et avantages de l'invention apparaîtront à l'examen de la description détaillée ci-après, et de l'unique figure annexée qui illustre de façon schématique une partie d'un réseau de communications équipé de dispositifs de gestion selon l'invention. Cette figure pourra non seulement servir à compléter l'invention, mais aussi contribuer à sa définition, le cas échéant.

L'invention porte sur un dispositif et un procédé de gestion des interruptions de liaisons entre des stations mobiles utilisatrices du réseau, telles que des téléphones mobiles, et le réseau d'accès radio, en présence de zones d'ombre radio. Ces dispositif et procédé sont donc respectivement destinés à être implantés et mis en oeuvre dans des réseaux cellulaires de communications, et notamment dans des réseaux publics de communications de type PLMN (pour « Public Land Mobile Network »), comme par exemple les réseaux dits « 2G » ou « 2,5G », tels que les réseaux GSM/GPRS, ou les réseaux dits « 3G », tels que le réseau UMTS. Mais, l'invention n'est pas limitée à ces réseaux et s'applique d'une manière générale à tous les réseaux cellulaires, et notamment aux réseaux de type TDMA, CDMA, CDMA-One, PHS et FOMA.

Comme illustré sur l'unique figure, ces réseaux cellulaires peuvent, d'une façon très schématique mais néanmoins suffisante à la compréhension de l'invention, être résumés à un coeur de réseau (ou « Core Network » (CN)) couplé à un réseau d'accès radio (ou « Radio Access Network » (RAN)) comportant :
- plusieurs noeuds (ou contrôleurs de réseau radio) couplés au Core Network CN, via une interface. Ces noeuds sont appelés BSC (pour « Base Station Controller »), dans le cas des réseaux de type GSM/GPRS, et RNC (pour « Radio Network Controller »), dans le cas des réseaux de type UMTS ; et
- plusieurs stations de base d'émission/réception, d'une part, associées chacune à une ou plusieurs cellules couvrant chacune une zone radio, et d'autre part couplées seules ou par groupe à l'un des noeuds, via une interface logique. Ces stations de base sont appelées BTS dans le cas d'un réseau de type GSM/GPRS et Node B dans le cas d'un réseau UMTS.

Dans ce qui suit on considère à titre d'exemple non limitatif que le réseau est de type TDMA, et plus précisément de type GPRS. Par ailleurs, on considère que les stations mobiles MS-i (ici, i = 1 à 3), sont capables d'échanger des données avec d'autres équipements du réseau, par exemple selon un protocole de type WAP (pour « Wireless Application Protocol »), SMS (pour « Short Message Service »), EMS (pour « Extended Message Service »), MMS (pour « Multimédia Message Service »), TCP (pour « Transport Control Protocol »). Par conséquent, les stations mobiles MS-i peuvent être des téléphones mobiles, des assistants numériques personnels (ou PDA pour « Personal Digital Assistant ») ou des ordinateurs portables équipés d'une interface radio, et plus généralement tout type de machine mobile ou itinérante équipée d'une interface radio et adaptée notamment aux applications de télésurveillance, ou de télé-maintenance, ou encore de contrôle de trafic routier ou ferroviaire. On considère également, à titre illustratif, que chaque station de base du RAN, ici une BTSj (ici, j = 1 ou 2) contrôle une unique cellule Cj définissant une zone géographique (assimilée ci-après à la cellule Cj correspondante). Bien entendu, chaque BTS pourrait contrôler plusieurs cellules, et une zone géographique pourrait être définie par plusieurs cellules ou portions de cellules. Enfin, on considère que chaque BSCn (ici, n = 1 ou 2) contrôle une unique station de base BTSj.

Comme indiqué précédemment, le dispositif D selon l'invention est destiné à gérer les problèmes d'interruption de liaison qui surviennent lorsque la station mobile MS-i parvient dans l'une des zones d'ombre radio d'une cellule Cj.

Avant qu'une telle situation ne survienne, la station mobile MS-i a établi une liaison avec un autre équipement du réseau, par exemple via la BTSj, qui gère la cellule Cj dans laquelle elle se trouve, et via la BSCn, qui gère la BTSj au sein du RAN et qui alloue une partie des ressources radio du réseau.

Une fois parvenue dans une zone d'ombre, la station mobile MS-i n'est plus à portée radio de la BTSj à laquelle elle est rattachée, si bien qu'elle ne peut plus échanger de données avec le réseau de communications. En d'autres termes, il survient une interruption de liaison.

Afin de traiter ces interruptions, il est préférable d'implanter un dispositif de gestion D dans chaque BSC du RAN.

Le dispositif de gestion D comporte tout d'abord un module de détection DM destiné à détecter les interruptions de trafic. Par définition, on appelle « interruption de trafic » le fait que l'on ne reçoive plus de données de service et/ou de données à transférer d'une station mobile MS-i avec laquelle une liaison avait été précédemment établie.

Le dispositif D comporte également un module de contrôle CM couplé au module de détection DM et destiné à intervenir auprès de la BSCn lorsque ledit module de détection DM l'avertit qu'il a détecté une interruption.

Préférentiellement, le module de détection DM adresse au module de contrôle CM un message d'avertissement de détection chaque fois qu'il a détecté une interruption de transfert d'une durée au moins égale à une valeur choisie Tint. A réception de ce message, le module de contrôle CM adresse à la BSC un message lui ordonnant de suspendre la liaison radio concernée, puis de tenter de réactiver cette liaison radio selon un schéma temporel choisi.

Egalement de préférence, les tentatives de réactivation de la liaison s'effectuent selon un schéma temporel de type périodique. Par exemple, la période est égale à 1 seconde.

En variante, les tentatives de réactivation de la liaison peuvent s'effectuer selon un schéma temporel utilisant des résultats statistiques connus sur le réseau considéré. Par exemple, si l'on a constaté majoritairement des durées d'interruption de deux secondes, de trois secondes, ou « infinies » (interruptions définitives), les tentatives de réactivation de la liaison peuvent utiliser le schéma temporel suivant : une tentative après deux secondes d'interruption, une autre tentative après trois secondes, l'interruption étant alors considérée comme définitive après ces deux tentatives infructueuses. Dans cette variante, c'est préférentiellement le module de contrôle CM qui élabore le schéma temporel à partir des résultats statistiques qu'il reçoit du réseau de communications et qui portent sur les durées des interruptions détectées par le module de détection DM.

Par ailleurs, les tentatives de réactivation de la liaison radio sont préférentiellement effectuées selon le schéma temporel choisi pendant un intervalle de temps choisi, par exemple égal à la durée RL à partir de laquelle la rupture de liaison est considérée comme définitive par la station mobile MS-i. Dans le cas d'un réseau de type GPRS cette durée RL est égale à cinq secondes. Une fois la durée RL écoulée, la liaison est considérée comme définitivement interrompue. La BSC est alors autorisée par le module de contrôle CM du dispositif de gestion D à allouer les ressources radio à une nouvelle liaison radio.

Grâce à l'invention, les ressources radio demeurent donc allouées à la liaison momentanément interrompue pendant toute la durée de l'intervalle de temps choisi, si bien que cette liaison peut être instantanément rétablie dès que la station mobile MS-i sort de la zone d'ombre radio (bien entendu, sous réserve que l'intervalle de temps choisi ne soit pas écoulé). De plus, en GPRS comme en CDMA, la bande passante étant partagée, elle peut donc être réutilisée, pendant la durée de l'interruption, par d'autres stations mobiles qui peuvent communiquer. En d'autres termes, on interrompt le trafic quand on sait que statistiquement on ne pourra pas communiquer avec une station mobile. Cela permet par conséquent d'allouer de la bande passante aux stations mobiles qui en ont l'utilité.

Comme indiqué précédemment, le dispositif D selon l'invention est préférentiellement implanté dans chaque contrôleur de réseau BSC. Dans ce cas, il est préférentiellement intégré dans la partie du contrôleur de réseau BSC chargée de contrôler les transferts de données en mode paquets, c'est-à-dire dans le cas d'un réseau de type GPRS, dans la fonction PCU (pour « Packet Control Unit ») de chaque BSC du réseau. D'une manière générale, le dispositif selon l'invention est préférentiellement implanté dans la BSC si celle-ci supporte la fonction PCU, ou dans un autre équipement si celui-ci supporte la fonction PCU.

Le module de contrôle CM et le module de détection DM du dispositif D selon l'invention peuvent être réalisés sous la forme de module(s) logiciel(s) ("software"). Mais ils peuvent être également réalisés, au moins en partie, sous la forme de circuits électroniques ("hardware"), ou encore sous la forme de combinaisons de modules logiciels et de circuits électroniques.

L'invention offre également un procédé de gestion des interruptions momentanées des liaisons radio entre des stations mobiles MS-i et un réseau d'accès radio (RAN) d'un réseau de communications.

Ce procédé peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituant le dispositif décrit ci-avant, seules seront résumées ci-après les étapes mettant en oeuvre les fonctions principales du procédé selon l'invention.

Le procédé selon l'invention consiste à observer au niveau du RAN, par exemple dans l'un au moins de ses contrôleurs de réseau radio (par exemple des BSCs), les données qu'il reçoit d'une station mobile (par l'intermédiaire d'une station de base BTS), représentatives de l'état de la liaison radio entre la station mobile et le RAN, de sorte qu'en cas de détection d'une interruption de cette liaison radio, on procède à la suspension de la liaison radio, puis on tente de réactiver cette liaison radio en fonction d'un schéma temporel choisi, par exemple de type périodique.

L'invention ne se limite pas aux modes de réalisation de dispositif, d'équipement de réseau radio, de station de base, de contrôleur de réseau radio et de procédé décrits ci-avant, seulement à titre d'exemple, mais elle englobe toutes les variantes que pourra envisager l'homme de l'art dans le cadre des revendications ci-après.

## Revendications

1. Procédé de gestion de liaisons radio entre au moins une station mobile (MS-i) et un réseau d'accès radio (RAN) d'un réseau de communications, **caractérisé en ce qu'**en cas de détection d'une interruption de liaison radio entre une station mobile (MS-i) et ledit réseau d'accès radio (RAN) on suspend ladite liaison radio et on tente de réactiver ladite liaison radio selon un schéma temporel choisi, et **en ce que** l'on élabore ledit schéma temporel à partir de résultats statistiques obtenus dans ledit réseau de communications et portant sur les durées desdites interruptions détectées.

2. Procédé selon la revendication 1, **caractérisé en ce que** l'on tente de réactiver ladite liaison radio après chaque détection d'interruption.

3. Procédé selon la revendication 1, **caractérisé en ce que** l'on tente de réactiver ladite liaison radio selon ledit schéma temporel choisi pendant un intervalle de temps choisi.

4. Procédé selon la revendication 1, **caractérisé en ce que** ledit schéma temporel est de type périodique.

5. Dispositif de gestion de liaisons radio entre au moins une station mobile (MS-i) et un contrôleur de réseau radio (BSCn) d'un réseau d'accès radio (RAN) de réseau de communications, **caractérisé en ce qu'**il comprend des moyens de détection (DM) agencés pour détecter une interruption de liaison radio entre une station mobile (MS-i) et ledit contrôleur de réseau radio (BSCn), et des moyens de contrôle (CM) agencés, en cas de détection de ladite interruption, pour ordonner audit contrôleur de réseau radio (BSCn) de suspendre ladite liaison radio, puis de tenter de réactiver ladite liaison radio selon un schéma temporel choisi, et **en ce que** lesdits moyens de contrôle (CM) sont agencés pour élaborer ledit schéma temporel à partir de résultats statistiques obtenus dans ledit réseau de communications et Portant sur les durées desdites interruptions détectées par lesdits moyens de détection (DM).

6. Dispositif selon la revendication 5, **caractérisé en ce que** lesdits moyens de contrôle (CM) sont agencés pour ordonner audit contrôleur de réseau radio (BSCn) de tenter de réactiver ladite liaison radio après chaque détection d'interruption signalée par lesdits moyens de detection (DM).

7. Dispositif selon la revendication 5, **caractérisé en ce que** lesdits moyens de contrôle (CM) sont agencés pour ordonner audit contrôleur de réseau radio (BSCn) de tenter de réactiver ladite liaison radio selon ledit schéma temporel choisi pendant un intervalle de temps choisi.

8. Dispositif selon la revendication 5, **caractérisé en ce que** ledit schéma temporel est de type périodique.

9. Contrôleur de réseau radio (BSCn) d'un réseau d'accès radio (RAN) de réseau de communications, **caractérisé en ce qu'**il comporte un dispositif (D) selon l'une des revendications 5 à 8.

10. Equipement d'un réseau d'accès radio (RAN) de réseau de communications comportant au moins un contrôleur de réseau radio (BSCn), **caractérisé en ce qu'**il comporte un dispositif (D) selon l'une des revendications 5 à 8.

11. Réseau de communications comportant un réseau d'accès radio (RAN) comprenant au moins un contrôleur de réseau radio (BSCn), **caractérisé en ce qu'**il comporte au moins un dispositif (D) selon l'une des revendications 5 à 8.

## Patentansprüche

1. Verfahren zur Verwaltung von Funkverbindungen zwischen mindestens einer mobilen Station (MS-i) und einem Funkzugangsnetzwerk (RAN) eines Kommunikationsnetzwerks, **dadurch gekennzeichnet, dass** man bei Erkennen eines Abbruchs einer Funkverbindung zwischen einer mobilen Station (MS-i) und dem besagten Funkzugangsnetzwerk (RAN) die besagte Funkverbindung unterbricht und versucht, die besagte Funkverbindung gemäß einem gewählten Zeitschema zu reaktivieren, und dass man das besagte Zeitschema ausgehend von den in dem besagten Kommunikationsnetzwerk erzielten und die Dauern der besagten erkannten Abbrüche betreffenden statistischen Ergebnissen erstellt.

2. Verfahren nach Anspruch 1, **dadurch gekennzeichnet, dass** man versucht, die besagte Funkverbindung nach jedem Erkennen eines Abbruchs zu reaktivieren.

3. Verfahren nach Anspruch 1, **dadurch gekennzeichnet, dass** man versucht, die besagte Funkverbindung gemäß dem besagten gewählten Zeitschema während eines gewählten Zeitintervalls zu reaktivieren.

4. Verfahren nach Anspruch 1, **dadurch gekennzeichnet, dass** das besagte Zeitschema periodischer Art ist.

5. Vorrichtung zur Verwaltung von Funkverbindungen zwischen mindestens einer mobilen Station (MS-i) und einer Funknetzwerk-Steuereinrichtung (BSCn) eines Funkzugangsnetzwerks (RAN) eines Kommunikationsnetzwerks, **dadurch gekennzeichnet, dass** sie Detektionsmittel (DM), welche dazu ausgelegt sind, einen Abbruch einer Funkverbindung zwischen einer mobilen Station (MS-i) und der besagten Funknetzwerk-Steuereinrichtung (BSCn) zu erkennen, und Steuerungsmittel (CM), welche dazu ausgelegt sind, bei Erkennen des besagten Abbruchs der besagten Funknetzwerk-Steuereinrichtung (BSCn) zu befehlen, die besagte Funkverbindung zu unterbrechen und anschließend zu versuchen, die besagte Funkverbindung gemäß einem gewählten Zeitschema zu reaktivieren, umfasst, und dass die besagten Steuerungsmittel (CM) dazu ausgelegt sind, das besagte Zeitschema ausgehend von den in dem besagten Kommunikationsnetzwerk erzielten und die Dauern der besagten von den besagten Detektionsmittel (DM) erkannten Abbrüche betreffenden statistischen Ergebnissen zu erstellen.

6. Vorrichtung nach Anspruch 5, **dadurch gekennzeichnet, dass** die besagten Steuerungsmittel (CM) dazu ausgelegt sind, der besagten Funknetzwerk-Steuereinrichtung (BSCn) zu befehlen, zu versuchen, die besagte Funkverbindung nach jedem Erkennen eines von den besagten Detektionsmitteln (DM) signalisierten Abbruchs zu reaktivieren.

7. Vorrichtung nach Anspruch 5, **dadurch gekennzeichnet, dass** die besagten Steuerungsmittel (CM) dazu ausgelegt sind, der besagten Funknetzwerk-Steuereinrichtung (BSCn) zu befehlen, zu versuchen, die besagte Funkverbindung gemäß dem besagten ausgewählten Zeitschema während eines gewählten Zeitintervalls zu reaktivieren.

8. Vorrichtung nach Anspruch 5, **dadurch gekennzeichnet, dass** das besagte Zeitschema periodischer Art ist.

9. Funknetzwerk-Steuereinrichtung (BSCn) eines Funkzugangsnetzwerks (RAN) eines Kommunikationsnetzwerks, **dadurch gekennzeichnet, dass** sie eine Vorrichtung (D) gemäß einem der Ansprüche 5 bis 8 aufweist.

10. Betriebsmittel eines Funkzugangsnetzwerks (RAN) eines Kommunikationsnetzwerks mit mindestens einer Funknetzwerk-Steuereinrichtung (BSCn), **dadurch gekennzeichnet, dass** es eine Vorrichtung (D) gemäß einem der Ansprüche 5 bis 8 aufweist.

11. Kommunikationsnetzwerk mit einem Funkzugangsnetzwerk (RAN), welches mindestens eine Funknetzwerk-Steuereinrichtung (BSCn) umfasst, **dadurch gekennzeichnet, dass** es mindestens eine Vorrichtung (D) gemäß einem der Ansprüche 5 bis 8 aufweist.

## Claims

1. A method of managing radio links between at least one mobile station (MS-i) and a radio access network (RAN) of a communications network, **characterized in that**, in the event of an interruption being detected in the radio link between a mobile station (MS-i) and said radio access network (RAN), said radio link is suspended, and an attempt is made to reactivate said radio link in application of a selected timetable, and **in that** said timetable is created based on statistical findings obtained within said communications network, pertaining to the durations of said detected interruptions.

2. A method according to claim 1, **characterized in that** an attempt is made to reactivate said radio link after each interruption detection.

3. A method according to claim 1, **characterized in that** an attempt is made to reactivate said radio link in application of said selected timetable during a selected time interval.

4. A method according to claim 1, **characterized in that** said timetable is of the periodic type.

5. An apparatus for managing radio links between at least one mobile station (MS-i) and a radio network controller (BSCn) of a radio access network (RAN) of a communications network, **characterized in that** it comprises detection means (DM) operative to detect a radio link interruption between a mobile station (MS-i) and said radio network controller (BSCn), and control means (CM) operative, in the event of such an interruption being detected, to order said radio network controller (BSCn) to suspend said radio link, then to attempt to reactivate said radio link in application of a selected timetable, and **in that** said control means (CM) are operative to create said timetable based on statistical findings obtained within said communications network, pertaining to the durations of said interruptions detected by said detection means (DM).

6. An apparatus according to claim 5, **characterized in that** said control means (CM) are operative to order said radio network controller (BSCn) to attempt to reactivate said radio link after each interruption detection reported by said detection means (DM).

7. An apparatus according to claim 5, **characterized in that** said control means (CM) are operative to order said radio network controller (BSCn) to attempt to reactivate said radio link in application of said selected timetable during a selected time interval.

8. A method according to claim 5, **characterized in that** said timetable is of the periodic type.

9. A radio network controller (BSCn) of a radio access network (RAN) of a communications network, **characterized in that** it comprises an apparatus (D) according to one of the claims 5 to 8.

10. Equipment for a radio access network (RAN) of a communications network comprising at least one radio network controller (BSCn), **characterized in that** it comprises an apparatus (D) according to any one of claims 5 to 8.

11. A communications network comprising a radio access network (RAN) comprising at least one radio network controller (BSCn), **characterized in that** it comprises at least one apparatus (D) according to any one of claims 5 to 8.
